# FASCICULE DE BREVET EUROPEEN

(11) **EP 1 337 074 B1**
(45) Date de publication et mention de la délivrance du brevet: **18.04.2007**
(21) Numéro de dépôt: 03290057.3
(22) Date de dépôt: 10.01.2003
(51) Int. Cl.: H04L 12/24

(54) **Système de gestion de réseau avec validation de règles**
System zur Netzwerkverwaltung mit Regelüberprüfung
System for network management with rule validation

(30) Priorité: 14.01.2002 FR 0200371
(43) Date de publication de la demande: 20.08.2003
(73) Titulaire: Alcatel Lucent, 75008 Paris (FR)
(72) Inventeur: Koops, Mark, 91310 Montlhery (FR); Labrogere, Paul, 75014 Paris (FR); Detot, Francis, 91240 Saint-Michel-sur-Orge (FR)
(74) Mandataire: Chaffraix, Sylvain

(56) Documents cités:
- WO-A-97/37477
- US-B1- 6 243 747
- LUPU E C ET AL: "Conflicts in Policy-Based Distributed Systems Management" IEEE TRANSACTIONS ON SOFTWARE ENGINEERING, IEEE INC. NEW YORK, US, vol. 25, no. 6, décembre 1999 (1999-12), pages 852-869, XP002177589 ISSN: 0098-5589

## Description

La présente invention concerne un système de gestion de réseau, à base de règles. Elle concerne plus particulièrement la façon dont les règles sont réparties sur l'ensemble des points de mise en oeuvre de règles du réseau.

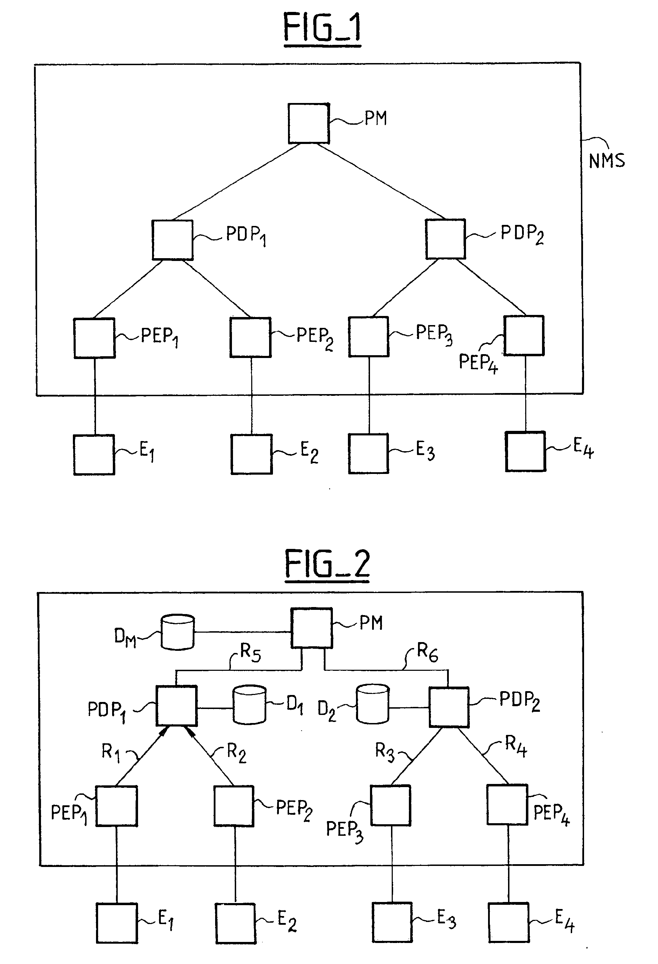

Ainsi qu'illustré par la figure 1, un réseau notamment de télécommunication, est composé d'un ensemble d'équipements E₁, E₂, E₃, E₄. Il est généralement associé à un système de gestion de réseau NMS, dont un des buts est gérer le comportement de ce réseau, en fonction des demandes qui peuvent lui être faite. Notamment, chaque demande de services issue d'un client peut donner lieu à une reconfiguration d'une partie des équipements du réseau. Cette étape de reconfiguration est plus connue sous le terme anglais de « service provisioning ».

Une façon de faire classique pour établir un lien dynamique entre les demandes (notamment, de services) et les reconfigurations à effectuer, consiste à définir un ensemble de règles. Cette façon de faire est notamment celle préconisée par l'IETF (Internet Engineering Task Force) et est par exemple décrite dans les RFC 3060 intitulé « Policy Core Information Model -- Version 1 Specification » daté de février 2001, ou RFC 3198 intitulé « Terminology for Policy-Based Management*.* », daté de novembre 2001.

Ces règles sont gérées par un gestionnaire de règles PM ou Policy Manager, en anglais. Le gestionnaire de règles PM transmet les règles à des points de décision PDP₁, PDP₂ ou Policy Decision Point, selon des instructions de répartition. Typiquement, ces instructions de répartition sont fournies par l'opérateur lors de la création des règles.

Enfin, les points de décision PDP₁, PDP₂ transmettent les règles à des points d'application de règles PEP₁, PEP₂, PEP₃, PEP₄ ou Policy Enforcement Point. Ces points d'application de règles PEP₁, PEP₂, PEP₃, PEP₄ sont associés aux équipements du réseau, respectivement E₁, E₂, E₃, E₄.

Du fait de l'utilisation de règles, le réseau est à même de s'adapter dynamiquement et automatiquement aux demandes, notamment de services, qui peuvent survenir.

Cependant, une telle façon de faire présente un inconvénient majeur puisqu'elle suppose que les instructions de répartition sont exemptes d'erreurs. Ceci laisse donc reposer sur l'opérateur en charge de la définition des règles et des instructions de répartition, une lourde responsabilité et le travail fastidieux de consulter une cartographie détaillée du réseau afin de déterminer les capacités de chaque équipement de réseau.

En cas d'erreur, un point d'application de règle PEP essaiera d'appliquer une règle à un équipement de réseau incapable de la mettre en oeuvre. Il peut en résulter d'un part la perturbation de cet équipement de réseau et d'autre part, un mauvais comportement de la politique de règles déployé par l'opérateur.

Le but de l'invention est de palier ces problèmes, c'est-à-dire de proposer un mécanisme et un système de gestion de réseau, qui
■ Facilitent l'écriture et le déploiement des règles par l'opérateur,
■ Garantissent qu'une règle ne sera pas déployée sur un mauvais point de mise en oeuvre de règle.

Pour ce faire, l'invention a pour objet un système de gestion de réseau comportant un gestionnaire de règles associé à un ensemble de règles et possédant un moyen de répartition pour transmettre ces règles à des points d'application de règles, selon des instructions de répartition, par l'intermédiaire de points de décision. Ce système de gestion de réseau se caractérise en ce que le gestionnaire de règles comporte de surcroît
- un moyen de réception de profils de capacités des points d'application de règles,
- un moyen de validation pour valider si les points d'application de règles peuvent effectivement mettre en oeuvre ces règles, en fonction des profils de capacités, et corriger les instructions de répartition en fonction de cette validation.

Les profils de capacité peuvent provenir des points de décision.

L'invention a pour autre objet un point de décision comportant des moyens pour recevoir des règles en provenance d'un gestionnaire de règles appartenant à un système de gestion de réseau. Ce point de décision comporte un moyen de répartition pour transmettre les règles à des points d'application de règles selon des instructions de répartition. Il se caractérise en ce qu'il possède de surcroît des moyens pour recevoir des profils de capacités de la part des points de d'application de règles et les transmettre au gestionnaire de règles.

Selon une mise en oeuvre de l'invention, il possède en outre des moyens de validation pour valider les règles en fonction des profils de capacités.

L'invention et ses avantages apparaîtront de façon plus claire dans la description qui va suivre en liaison avec les figures annexées.
La figure 1, déjà commentée, schématisé un système de gestion de réseau par règles.
La figure 2 illustre un système de gestion de réseau, par règles, selon une mise en oeuvre de l'invention.
La figure 3 représente un diagramme définissant les profils de capacité selon une mise en oeuvre de l'invention.

On a représenté sur la figure 2, un réseau comportant 4 équipements E₁, E₂, E₃ et E₄. Ces équipements sont associés à des points d'application de règles, respectivement PEP₁, PEP₂, PEP₃ et PEP₄, appartenant à un système de gestion de réseau NMS.

Ce système de gestion de réseau comporte de surcroît un gestionnaire de règles PM et 2 points de décision de règles PDP₁ et PDP₂. Les points d'application de règles PEP₁ et PEP₂ sont connectés au point de décision de règles PDP₁ et les points d'application de règles PEP₃ et PEP₄ sont connectés au point de décision de règles PDP₂. Les deux points de décision de règles PDP₁ et PDP₂ sont connectés au gestionnaire de règles PM.

L'opérateur entre, au niveau du gestionnaire de règles PM, un ensemble de règles associées à des instructions de répartition.

Ces instructions de répartition déterminent vers quels points d'applications des règles, ces règles doivent être transmises.

Selon l'invention, le gestionnaire de règles comporte de surcroît un moyen de validation. Le rôle de ce moyen de validation est de valider les règles et les instructions de répartition, c'est-à-dire de vérifier que les points d'applications de règles indiqués par les instructions de répartition sont bien capable de les mettre en oeuvre.

Le cas échéant, les instructions de répartition sont modifiées pour prendre en compte cette incompatibilité.

La validation effectuée par le gestionnaire de règles PM peut n'être qu'une validation d'assez haut niveau. Elle peut par exemple ne s'intéresser qu'à des grandes classes de capacités comme « Qualité de service » (QoS pour Quality of Service, en anglais), « Mise en forme du trafic », « Traduction d'adresses réseau » ou NAT (pour Network Address Translation, en anglais), « support du protocole MPLS (Multi-Protocol Label Switching). Chaque point d'application de règles possède une liste de capacités qui peuvent être décrite selon ces classes.

Plus précisément, pour chaque règle, le moyen de validation regarde les points d'application des règles (PEP) vers lesquels elle doit être déployée, selon les instructions de répartition associées. Il vérifie que la règle concerne effectivement une classe faisant partie de la liste des capacités de chaque point d'application des règles.

Si tel n'est pas le cas, les instructions de répartition peuvent être modifiées pour ne plus désigner le point d'application des règles concerné.

Les règles sont alors effectivement transmises vers les points de décision de règles (PDP), selon les instructions de répartition éventuellement modifiées.

A ce stade, une seconde validation peut être effectuée, cette fois-ci à un degré de précision plus élevé : le moyen de validation peut alors prendre en compte les attributs des capacités des points d'application des règles (PEP).

De la même façon que précédemment, les instructions de répartition peuvent, le cas échéant, être modifié en adéquation avec la validation.

Ensuite, les règles sont finalement transmises aux points d'application des règles (PEP) avec l'assurance que ceux-ci sont en mesure de les mettre en oeuvre.

Selon une mise en oeuvre de l'invention, le gestionnaire de règles PM et les points de décision de règles PDP₁ et PDP₂ disposent de moyens de réception de profils de capacités des points d'application des règles PEP₁, PEP₂, PEP₃ et PEP₄.

Chaque point d'application des règles transmet au point de décision de règles auquel il est connecté, un profil de capacités, dans des messages R₁, R₂, R₃ et R₄. Le point de décision transmet ce profil de capacité au gestionnaire de règles, dans des messages R₅, R₆.

Ces profils de capacités peuvent être mémorisés par les points de décision de règles PDP₁ et PDP₂ dans des bases de données D₁ et D₂ respectivement, et par le gestionnaire de règles PM dans une base de données D_{M}.

Selon un mode de réalisation, il peut attendre de recevoir les profils de capacités de l'ensemble des points d'applications des règles, avant de les transmettre, en un unique message, au gestionnaire de règles PM. L'intérêt d'un tel mode de réalisation est de minimiser le nombre de messages échangés.

Il peut être prévu que les transmissions des profils de capacités sont effectuées lors de l'enregistrement des points d'application des règles PEP₁, PEP₂, PEP₃, PEP₄ auprès des points de décision de règles PDP₁, PDP₂, et des points de décision de règles auprès du gestionnaire de règles PM.

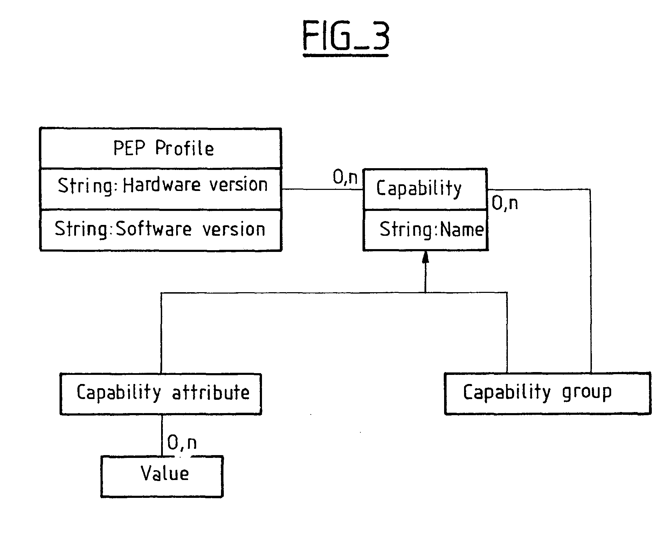

La figure 3 illustre les profils de capacité qui sont échangés, selon le langage UML (Unified Modelling Language).

Un exemple de profil de capacité peut être tel que suit :

```
       <PEPProfile> PEP1
               <CapabilityGroup> QoS
                        <CapabilityGroup> TrafficConditionning
                                <CapabilityAttribute> Scheduling
                                        <Value> Token Bucket Filter
                                        <Value> Class-based Filter
               <CapabilityGroup> PerHopBehavior
               <CapabilityGroup> FireWall
               <CapabilityGroup> NAT
```

En reprenant l'exemple de la figure 2, ce profil est transmis par le Point d'application des règles PEP1 au point de décision de règles PDP₁ lors de l'enregistrement du premier auprès du second.

Lorsque le point de décision de règles PDP₁ s'enregistre auprès du gestionnaire de règles PM, il lui transmet ce profil de capacité, dans le même message.

Le gestionnaire de règles PM peut alors effectuer la validation de haut niveau, par exemple en se basant uniquement sur les groupes de capacité (CapabilityGroup) de premier niveau QoS, « TrafficConditionning », « PerHopBehavior », « FireWall », « NAT ».

Si la règle concerne une traduction d'adresse réseau, le moyen de validation du gestionnaire de règles PM peut s'arrêter à détecter la présence d'un groupe de capacité «NAT» dans le profil de capacité du point d'application de règles PEP₁. Si tel est le cas, la règle est transmise au point de décision de règles PDP₁ auquel le point d'application de règles PEP₁ est connecté.

Après réception de la règle, le moyen de validation du point de décision de règles PDP₁ peut effectuer la validation de plus bas niveau en s'intéressant aux groupes de capacités de niveau inférieur ainsi qu'aux attributs (CapabilityAttribute) et à leurs valeurs (Value).

Ce ne peut être qu'après cette deuxième validation que la règle est finalement transmise au point d'application des règles PEP₁ pour y être mis en oeuvre.

## Revendications

1. Système de gestion de réseau (NMS) comportant un gestionnaire de règles (PM) associé à un ensemble de règles et possédant un moyen de répartition pour transmettre lesdites règles à des points d'application de règles (PEP₁, PEP₂, PEP₃, PEP₄), selon des instructions de répartition, par l'intermédiaire de points de décision (PDP₁, PDP₂), **caractérisé en ce que** ledit gestionnaire de règles comporte de surcroît :
• un moyen de réception de profils de capacités desdits points d'application de règles (PEP),
• un moyen de validation pour valider si lesdits points d'application de règles (PEP) peuvent effectivement mettre en oeuvre lesdites règles, en fonction desdits profils de capacités, et corriger lesdites instructions de répartition en fonction de cette validation.

2. Système de gestion de réseau selon la revendication précédente, dans lequel lesdits profils de capacité proviennent des points de décision (PDP₁, PDP₂).

3. Point de décision (PDP₁, PDP₂) comportant des moyens pour recevoir des règles en provenance d'un gestionnaire de règles (PM) appartenant à un système de gestion de réseau (NMS), comportant en outre un moyen de répartition pour transmettre lesdites règles à des points d'application de règles (PEP₁, PEP₂, PEP₃, PEP₄) selon des instructions de répartition, **caractérisé en ce qu'**il possède de surcroît des moyens pour recevoir des profils de capacités de la part desdits points d'application de règles (PEP) et les transmettre audit gestionnaire de règles (PM).

4. Point de décision selon la revendication précédente, possédant en outre des moyens de validation pour valider lesdites règles en fonction desdits profils de capacités.

## Claims

1. A network management system (NMS) including a policy manager (PM) associated with a set of policy rules and including distribution means for sending said policy rules to policy enforcement points (PEP₁, PEP₂, PEP₃, PEP₄) in accordance with distribution instructions via policy decision points (PDP₁, PDP₂), **characterized in that** said policy manager further includes:
means for receiving capability profiles of said policy enforcement points; and
validation means for validating if said policy enforcement points (PEP) can enforce said policy rules as a function of said capability profiles, and correcting said distribution instructions as a function of said validation.

2. A network management system according to the preceding claim, wherein said capability profiles come from policy decision points (PDP₁, PDP₂).

3. A policy decision point (PDP₁, PDP₂) including means for receiving policy rules coming from a policy manager (PM) of a network management system (NMS) and further including distribution means for sending said policy rules to policy enforcement points (PEP₁, PEP₂, PEP₃, PEP₄) in accordance with distribution instructions, **characterized in that** it further includes means for receiving capability profiles from said policy enforcement points (PEP) and sending them to said policy manager (PM).

4. A decision point according to the preceding claim, further including validation means for validating said policy rules as a function of said capability profiles.

## Patentansprüche

1. Netzwerkverwaltungssystem (NMS), umfassend einen Regelmanager (PM), der einer Gruppe von Regeln zugeordnet ist und der eine Verteilungsvorrichtung besitzt, um diese Regeln nach Verteilungsanweisungen über Entscheidungspunkte (PDP₁, PDP₂) an Regelanwendungspunkte (PEP₁, PEP₂, PEP₃, PEP₄) zu übertragen, **dadurch gekennzeichnet, dass** der Regelmanager darüber hinaus umfasst:
• eine Empfangsvorrichtung für Fähigkeitsprofile der Regelanwendungspunkte (PEP);
• eine Überprüfungsvorrichtung, um zu überprüfen, ob die Regelanwendungspunkte (PEP) in Abhängigkeit von den Fähigkeitsprofilen diese Regeln tatsächlich umsetzen können, und um die Verteilungsanweisungen in Abhängigkeit von dieser Überprüfung zu korrigieren.

2. Netzwerkverwaltungssystem nach dem vorhergehenden Anspruch, in dem die Fähigkeitsprofile von den Entscheidungspunkten (PDP₁, PDP₂) stammen können.

3. Entscheidungspunkt (PEP₁, PEP₂), umfassend Verteilungsvorrichtungen zum Empfangen der Regeln, die von einem zu einem Netzwerkverwaltungssystem (NMS) gehörenden Regelmanager (PM) stammen, außerdem umfassend eine Verteilungsvorrichtung, um die Regeln nach den Verteilungsanweisungen an Regelanwendungspunkte (PEP₁, PEP₂, PEP₃, PEP₄) zu übertragen, **dadurch gekennzeichnet, dass** er darüber hinaus Vorrichtungen umfasst, um Fähigkeitsprofile von den Regelanwendungspunkten (PEP) zu empfangen und sie an den Regelmanager (PM) zu übertragen.

4. Entscheidungspunkt nach dem vorhergehenden Anspruch, der außerdem Überprüfungsvorrichtungen zur Überprüfung der Regeln in Abhängigkeit von den Fähigkeitsprofilen besitzt.
